# EUROPEAN PATENT APPLICATION

(11) **EP 0 711 083 A2**
(43) Date of publication of application: **08.05.1996**
(21) Application number: 95307935.7
(22) Date of filing: 07.11.1995
(51) Int. Cl.: H04N 9/80

(54) **Recording/reproducing apparatus for data packet stream**

(30) Priority: 07.11.1994 JP 272621/94
(71) Applicant: KABUSHIKI KAISHA TOSHIBA, Kawasaki-shi, Kanagawa-ken 210 (JP)
(72) Inventor: Sakazaki, Yoshihisa, c/o Intellectual Prop. Div., Tokyo (JP); Abe, Shuji, c/o Intellectual Prop. Div., Tokyo (JP)
(74) Representative: Muir, Ian R.

(57) **Abstract**

A recording/reproducing apparatus for a data packet stream including an extractor (2) for extracting prescribed one or more intended types of data packets from an input packet train in which different types of data packets have been time-division multiplexed with each other so as to output them as the extracted data packets, a recording circuit (5) for recording the extracted data packets, a reproducing circuit (7) for reproducing the extracted data packet recorded by the recording circuit, a dummy packet producer (10) for producing dummy packets which correspond to non-extracted data packet, and an output circuit (9) for outputting an output data packet train which is produced by combining the extracted data packets and the dummy packets in accordance with the order of the packets in the input packet train.

## Description

The present invention relates to a recording/reproducing apparatus for a data packet stream adapted to multichannel data.

A digital processing of images has been greatly developed in recent years along with the progress of image compression techniques such as the MPEG2 (Moving Picture Experts Group 2) system. Also, in the television broadcasting system a digital broadcasting system adopting the MPEG2 system has been studied. Further, multimedia services which are capable of providing various information services in terms of images in response to user demands by integrally handling audio and video data are begun to develop.

The MPEG2 system is adapted to the multichannel broadcasting and the multimedia service in the fields of communications or storage media. That is, to facilitate time-division multiplexing of a plurality of video and audio data, the MPEG2 carries information in packet by packet manner. One packet is comprised of the same type of information data as well as an identification data showing the type of information data.

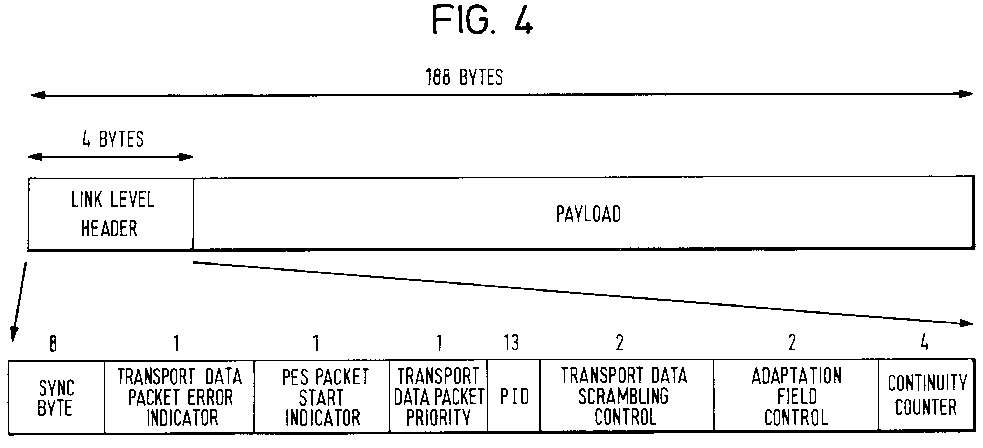

FIGURE 4 shows a diagram showing the construction of a transport data packet which constitutes a data packet defined in the MPEG2 standard.

The transport data packet is adapted to multiprogram (multichannel data) in which desired program packets are able to be extracted from a plurality of programs transmitted in the time-division multiplex system during the decoding. For extracting the desired data packets, transport data packets are comprised of a Link Level Header added prior to a payload for carrying information. Four bytes out of 188 bytes of the transport data packet are assigned for the Link Level Header. Further, several transport data packets constitute a PES (Packetized Elementary Stream) packet.

The Link Level Header is comprised of a Sync byte beginning from its top, and followed by a Transport Data Packet Error Indicator showing the presence or absence of a bit error, a PES packet start indicator showing the starting point of a PES packet, a Transport Data Packet Priority showing a priority of packets, a PID (Packet Identification) which identities packets, a Transport Data Scrambling Control showing the presence or absence of scrambles, an Adaptation Field Control showing the presence or absence of payloads, etc. and a Continuity Counter showing the number of the same PIDs in contiguous sequence, in this order.

An MPEG2 decoder functions to extract the same PID packets in reference to the PIDs. Thus the MPEG2 decoder decodes desired programs only, from transmission data. For instance, even when transport data streams including coded data of a plurality of images A, B, C, ... are input, the decoder is possible to display one desired image only, on a television receiver conforming to the MPEG2 standard.

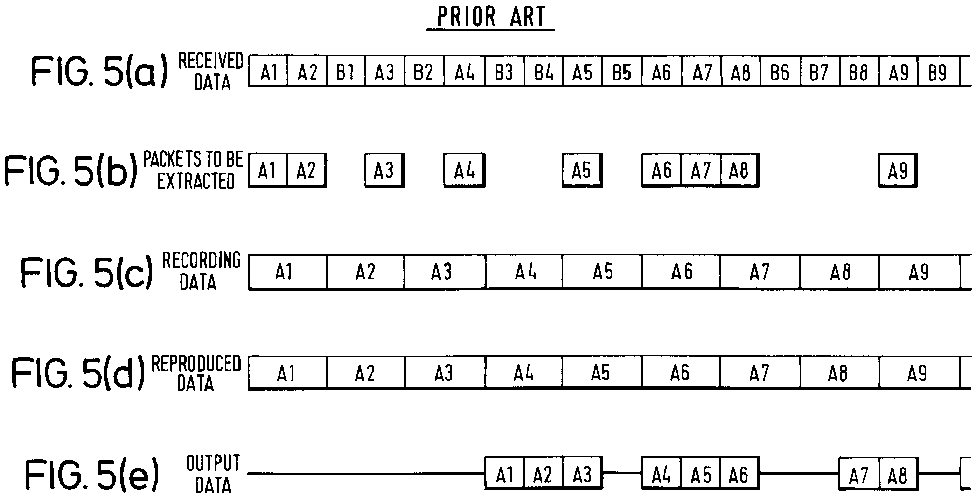

By the way, it is considered to extract a desired packet only from the transport data streams transmitted according to the MPEG2 standard and record the extracted packets on a VTR (Video Tape Recording circuit). FIGURE 5 is a diagram for illustrating the processing of the case. FIGURE 5(a) shows received data (a transport data stream). FIGURE 5(b) shows the packets to be extracted. FIGURE 5(c) shows recording data. FIGURE 5(d) shows reproduced data train and FIGURE 5(e) shows output data.

The received data contains two types of images A, B which have been coded and packetized to packets A1, A2, ... B1, B2, .... Then they are transmitted as a MPEG2 system transport data stream. By the way, as a decoding time in the MPEG decoder differs generally in response to the contents of data, received data are are once stored in a buffer in order to absorb a difference in processing times. The capacity of this buffer has been specified in the MPEG2 standard and the MPEG2 encoder controls transmission data in consideration of the processing time of the MPEG2 decoder so that overflows or underflows do not occur in the buffer. That is, the number of the same type of packets in contiguous sequence has been decided for the MPEG2 decoder in consideration of a decoding time of each packet. For instance, the transmission data, as shown in FIGURE 5(a), indicates that a transmission time for 3 packets may be needed for the decoding process of packets A1 and A2.

If only packets A1, A2, ... based on an image A are extracted and recorded, as shown in FIGURE 5(a), it is heeded to record the packets using a signal rate of the image A (1/2 of the transmission rate in FIGURE 5) as a recording rate. In other words, a recording signal is produced by changing a rate so that the data packet A1, A2, ... are continued in point of time, as shown in FIGURE 5(c).

The reproduced signal in this case is reproduced at a half of the transmission rate, as shown in FIGURE 5(d). For decoding by supplying the reproduced signal to the MPEG2 decoder, the reproduced signal rate is restored to the original transmission rate and output as output data. In this case, the reproduced packets A1, A2, ... are output at an equal interval or output by arranging them, as shown in FIGURE 5(e).

However, as described above, the image A is decoded in the MPEG2 decoder using the transmission times of the packets B1, B2, ... based on the image B and if the packets A1, A2, ... are input at an interval differing from transmission data, in the buffer of the MPEG2 decoder an overflow or underflow may occur. As described above, information of a processing time required for decoding is not contained in transport data packets and it is therefore not possible to transmit reproduced data at the same packet interval as transmission data. Further, if the reproduced data are transmitted at a burst, the detection of the start of packets, etc. in the MPEG2 decoder becomes unstable.

As described above, even when selectively recording or reproducing any data from transmitted data and outputting data by restoring the rate of signal reproduction to the transmission rate, as a decoding processing time required for the extracted data is not known, there was so far such a problem in which a rate at a prescribed time interval could not be brought in accord with a transmission data rate and a buffer in the decoder occurring an overflow or underflow. In addition, there was also a problem in which the detection of start of packets, etc. becomes unstable.

It is, therefore, an object of the present invention to provide a recording/reproducing apparatus for a data packet stream which is capable of preventing overflows or underflows in buffers of decoders coder by controlling an output rate of reproduced data.

Another object of the present invention is to provide a recording/reproducing apparatus for a data packet stream which is capable of stabilizing the processing of the decoder by controlling an output rate of reproduced data.

In order to achieve the above object, a recording/reproducing apparatus for a data packet stream according to one aspect of the present invention includes: an extractor for extracting prescribed one or more intended types of data packets from an input packet train in which different types of data packets have been time-division multiplexed with each other so as to output them as the extracted data packets; a recording circuit for recording the extracted data packets; a reproducing circuit for reproducing the extracted data packet recorded by the recording circuit; a dummy packet producer for producing dummy packets which correspond to non-extracted data packet; and an output circuit for outputting an output data packet train which is produced by combining the extracted data packets and the dummy packets in accordance with the order of the packets in the input packet train.

A recording/reproducing apparatus for a data packet stream according to another aspect of the present invention includes: an extractor for extracting prescribed one or more intended types of data packets from an input packet train in which different types of data packets have been time-division multiplexed with each other so as to output them as the extracted data packets; a deleting packet detector for detecting the number of data packets of non-extracted data in contiguous sequence lying between the extracted data so as to output the non-extracted data as information of the deleted packets; a combiner for combining the extracted data with the information of the deleted packets; a recording circuit for recording the output from the combiner; a reproducing ciruit for reproducing signals recorded by the recording circuit; a separator for separating the extracted data and the information of the number of deleted packets in contiguous sequence from the reproduced signal; a dummy packet producer for producing dummy packets which correspond to non-extracted data packet; and an output circuit for outputting an output data packet train which is produced by combining the extracted data packets and the dummy packets separately output from the separator in accordance with the order of the packets in the input packet train.

In the recording/reproducing apparatus for a data packet stream according to the first aspect of the present invention, prescribed intended type of data are extracted by the extractor and recorded by the recording circuit. The extracted data reproduced by the reproducing circuit are supplied to the output circuit, wherein the extracted data are combined with the dummy packet from the dummy packet producer. Thus, it becomes possible to make a transmission rate at a prescribed time interval of the output data trains from the output circuit as a rate based on the rate of the input data trains.

In the recording/reproducing apparatus for a data packet stream according to the second aspect of the present invention, the number of data packets of non-extracted data in contiguous sequence between the data extracted by the extractor are detected by the deleting packet detector. The information of the number of deleted packets in contiguous sequence is combined with the extracted data by the combiner and the output of the combiner is recorded by the recording circuit. The reproduced data from the reproducing circuit are separated to the extracted data and the information of the number of deleted packets in contiguous sequence by the separator. The output circuit outputs the extracted data while inserting dummy packet in the data packets based on the information of the number of data packets in contiguous sequence. Thus, it becomes possible to have a transmission rate at a prescribed time interval of the output data trains agree with the rate of the input data trains.

Additional objects and advantages of the present invention will be apparent to persons skilled in the art from a study of the following description and the accompanying drawings, which are hereby incorporated in and constitute a part of this specification.

For a better understandings of the present invention and many of the attendant advantages thereof, reference will now be made by way of example to the accompanying drawings, wherein:
FIGURE 1 is a block diagram showing an embodiment of a recording/reproducing apparatus for a data packet stream of the present invention;
FIGURE 2 is a diagram illustrating the operation of the embodiment of FIGURE 1;
FIGURE 3 is a diagram also illustrating the operation of the embodiment of FIGURE 1;
FIGURE 4 is a diagram illustrating the MPEG2 standard transport data packet; and
FIGURE 5 is a diagram illustrating problems in prior arts.

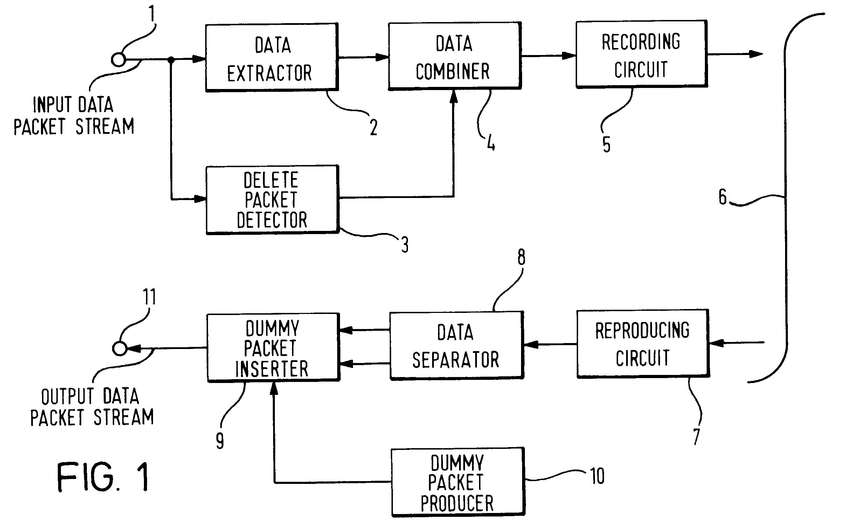

Preferred embodiments of the present invention will be described in detail with reference to the attached drawings, FIGURES 1, 2 and 3.

FIGURE 1 shows a block diagram showing one embodiment of a recording/reproducing apparatus for a data packet stream according to the present invention. This embodiment is specifically applied to the 6-mm type consumer-use digital VTR.

A prescribed bit stream, for instance, a transport data stream of the MPEG2 standard is input to an input terminal 1. This input data packet stream is comprised of several types of data which have been time-division multiplexed in packet by packet manner. The data interval of the same type of packets has considered a decoding process time. The input data packet stream is supplied to a data extractor 2 and a deleting packet detector 3. The data extractor 2 extracts desired data from different types of data contained in the input data packet stream for each transmission packet and outputs the extracted data to a data combiner 4. For instance, if a transport data stream of the MPEG2 standard is input, the data extractor 2 detects PIDs and by extracting only packets which have a desired PID, outputs the extracted packets as extracted data.

The deleting packet detector 3 extracts the number of the non-extracted transmission data packet (hereinafter referred to as non-extracted data packet) in contiguous sequence, that is, intervals of extracted data packets. The decoder 3 then outputs the detected result as the information of the number of deleted packets in contiguous sequence to the data combiner 4. The data combiner 4 combines the extracted data and the information of the deleted packets. If a transport data stream of the MPEG2 standard is input, the data combiner 4 reconstructs the transport data stream by assigning two extracted transport data packets to five recorded data packets (hereinafter referred to as sync block) of a 5 mm digital VTR. As the data area of a sync block is 77 bytes and a transport data packet is composed of 188 bytes, a residual portion of several bytes is produced by five sync blocks. The data combiner 4 arranges the information of two deleted packets in this residual portion.

Further, on a digital VTR, an error correction is performed for each sync block. If there is an uncorrectable error, data of which sync block is not used for the decoding process. Therefore, if any uncorrectable error occurs in a sync block containing two transport data packets, both of these two transport data packets are not used for the decoding process. Further, as the information of the number of deleted packets in contiguous sequence is used when extracted transmission data are decoded, the information of the number of deleted packets in contiguous sequence is arranged in a sync block containing two transport data packets.

The output of the data combiner 4 is supplied to a recording circuit 5. The recording circuit 5 outputs the input data after applying the error correction code adding process, modulation process, recording waveform equalizing process, etc. to the input data. The output from the recording circuit 5 is recorded on a magnetic tap 6 which is a recording medium through a rotary transformer and a head (not shown).

On the other hand, in the reproducing system the magnetic tape 6 is traced by the head (not shown) and reproduced data are supplied to a reproducing circuit 7 through the rotary transformer. The reproducing circuit 7 applies the reproduced waveform equalizing process, demodulation process, error correction process, etc. to reproduced data and outputs the data to a data separator 8. The data separator 8 separates extracted data from the reproduced data of the reproducing circuit 7 for each transmission packet and by separating the information of the number of deleted packets in contiguous sequence, outputs the information to a dummy packet inserter 9. For instance, if transmission data are transport data packets of the MPEG2, the data separator 8 separates two transport data packets and the information of two deleted packets from five sync blocks of reproduced data and outputs them to the dummy packet inserter 9.

A dummy packet producer 10 outputs a dummy packet (hereinafter referred to as a dummy packet) which is the same format transmission packet as the input data packet stream and has an identification data indicating a different type from extracted data. For instance, when an input data packet stream is composed of the MPEG2 transport data packets, these packets can be made null in the decoding process when the dummy packet producer 10 controls prescribed bits of the Link Level Header arranged at the top of each packet. For instance, if "1" is set up on an error indicator, it is possible to make this packet null by regarding it as an error packet. Further, PID may be set at a different value from a extracted data. In this case, this packet is disregarded in the decoding process. Further, the dummy packet producer 10 may output a 188 byte padding packet having a PID indicating a dummy packet. The dummy packet producer 10 may set up the payload at a null data, for instance. "FF" in the hexadecimal value.

The dummy packet inserter 9 inserts the dummy packet by the number of the deleted packets in contiguous sequence into the sequence of extracted packets from the data separator 8. That is, when a extracting data of one transmission packet is input, the dummy packet inserter 9 restores the reproduced signal rate to the transmission rate by inserting a dummy packet by the number of deleted packets next to the extracted data and outputs the data from an output terminal 11 as the output data packet stream.

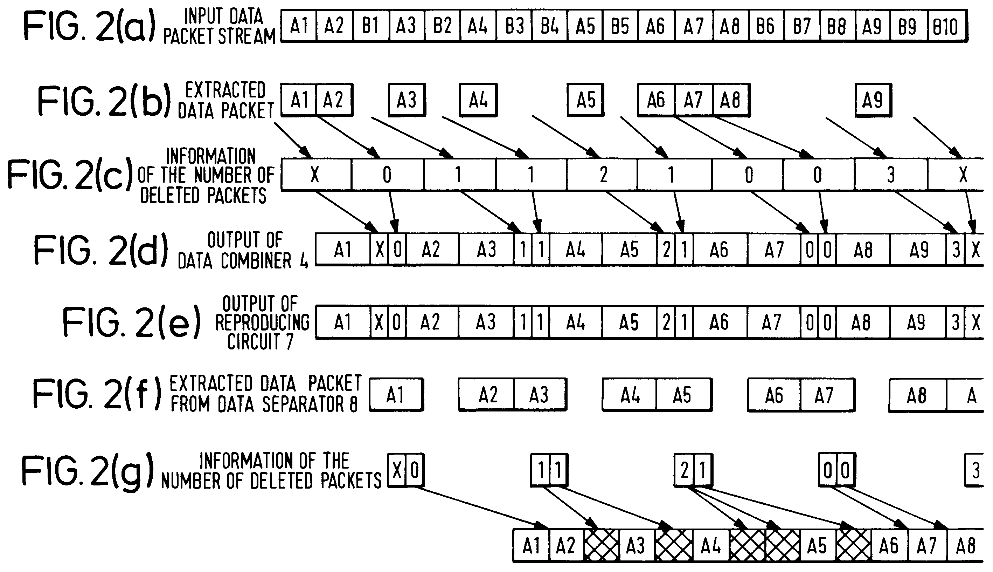

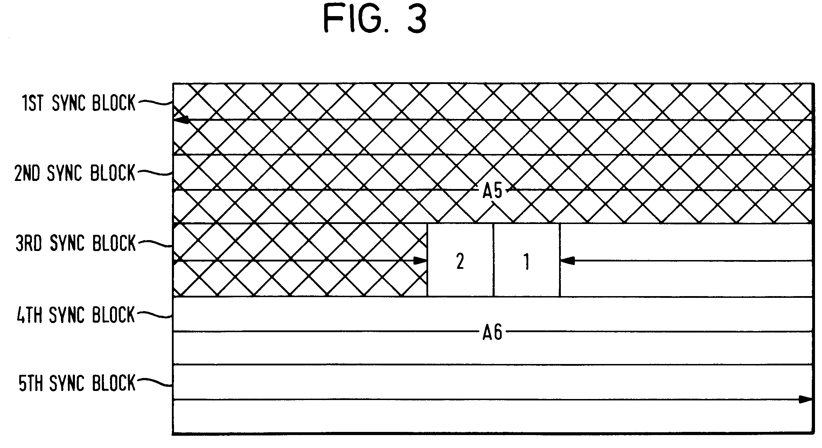

Next, the operation of the embodiment with the above-described construction will be explained with reference to FIGURES 2 and 3. FIGURE 2(a) shows the input data packet stream. FIGURE 2(b) shows the extracted data. FIGURE 2(c) shows the number of deleted packets in contiguous sequence. FIGURE 2(d) shows the output of the data combiner 4. FIGURE 2(e) shows the output of the reproducing circuit 7. FIGURE 2(f) shows the extracted data from the data separator 8. FIGURE 2(g) shows the information of the number of deleted packets in contiguous sequence. FIGURE 2(h) shows the output data packet stream. Further, the cross-hatching portions, as shown in FIGURE 2, indicate the dummy packet. FIGURE 3 shows the output of the data combiner 4.

The bit stream input through the input terminal 1 is supplied to the data extractor 2 and the deleting packet detector 3. It is now assumed that the input data packet stream is the MPEG2 system transport data stream in which the transport data packets A1, A2, ... based on the image A and the transport data packets B1, B2, ... based on the image B have beef time-division multiplexed. Then, the packets A1, A2, ... based on the image A only will be recorded.

The data extractor 2 extracts the packets A1, A2, ... based on the image A only by detecting PIDs of all the packets and outputs them to the data combiner 4 (FIGURE 2(b).On the other hand, the deleting packet detector 3 detects the number of different types of packets between the extracted packets and outputs it as the number of deleted packets in contiguous sequence. For instance, one packet B1 only is transmitted between the packets A2 and A3. Therefore, the number of deleted packets in contiguous sequence between the packets A1 and A2 is given to 0, while the number of deleted packets in contiguous sequence between the packets A2 an S3 is given to 1.

The extracted data (the extracted packets) and the information of the number of deleted packets in contiguous sequence are combined in the data combiner 4. In this case, the data combiner 4 makes two packets a set and arranges the number of non-extracted packets in contiguous sequence (i.e., the number of deleted packets in contiguous sequence) which have been transmitted immediately before these packets between these two packets, as shown in FIGURE 2(d). The data combiner 4 assigns the information of these two packets and two deleted packets to five sync blocks and supplies them to the recording circuit 5, as shown in FIGURE 3. Further, FIGURE 3 shows that the packets A5 and A6 are assigned to the 1st through the 5th sync blocks and the information of the number of deleted packets in contiguous sequence (2, 1), which is to lie between the extracted packets have been arranged to the third sync block. These packets are recorded on the magnetic tape 6 through the head (not shown) by the recording circuit 5 after applying the error correction code adding process, modulation process, recorded wave equalizing process, etc. In the example, as shown in FIGURE 2, the recording rate can be set at about a half (1/2) of the transmission rate.

At the time of reproduction, the recorded data on the magnetic tape 6 are reproduced by the head (not shown). The reproduction rate is the same as the recording rate. The reproducing circuit 7 supplies the reproduced data, as shown in FIGURE 2, to the data separator 8 after applying the reproduced wave equalizing process, demodulation process and error correction process. The data separator 8 separates the extracted packets, as shown in FIGURE 2(f), from the reproduced data and supplies to the dummy packet inserter 9. Further, the data separator 8 separates the information of the number of deleted packets in contiguous sequence, as shown in FIGURE 2(g), from the reproduced data and supplies to the dummy packet inserter 9.

On the other hand, the dummy packet producer 10 outputs, for instance, a packet with a PID differing from the PID of the extracted packet to the dummy packet inserter 9 as a dummy packet. The dummy packet inserter 9 inserts the dummy packet between the extracted packets according to the information of the number of deleted packets in contiguous sequence. The information of the number of deleted packets in contiguous sequence recorded by arranging immediately before the packet A2 is given to 0. Consequently, the dummy packet inserter 9 does not insert a dummy packet between the packets A1 and A2 and arranges them continuously. Further, the information of two deleted packets recorded by arranging between the packets A3 and A4 is given to 1. Therefore, the dummy packet inserter 9 inserts the dummy packet 1 immediately before the packets 3 and 4, respectively. That is, as shown in FIGURE 2(h), the dummy packet inserter 9 outputs the packets A1 and A2 continuously, followed by one dummy packet, the packet A3, one dummy packet and then, the packet A4 in that order. Thereafter, repeating the same steps, the output data packet stream, as shown in FIGURE 2(h), is obtained. By supplying this output data packet stream to the MPEG2 decoder (not shown), the packets A1, A2, ... are decoded and the restored image of the image A is obtained.

The output rate or the output data packet stream agrees with the transmission rate. Further, as clearly seen from the comparison of FIGURE 2(a) and (h), as to the packets A1, A2, ... based on the image A, the transmission volumes of the input data packet stream and the output data packet stream are the same at either time intervals. That is, the packets A1, A2, ... contained in the output data packet stream are output at a time interval required for the decoding process and the buffer of the MPEG2 decoder is prevented form the overflow or the underflow .

As described above, in this embodiment the number of packets in contiguous sequence to be removed so as not to be recorded (i.e., the number of deleted packets in contiguous sequence) is obtained for each extracted packet for recordation and recorded together with the extracted data. Further an output with a bit rate the same as the input data packet stream is obtained for the extracted data by inserting the dummy packet based on the number of the non-extracted packets in contiguous sequence between the reproduced extracted date. Thus, it is possible to prevent the buffer from causing the overflow or the underflow in the decoder to decode reproduced data. Furthermore, it becomes possible to stably detects the start of packets, etc. in the decoder as the output data packet streams become continuous in the same transmission format as the input data packet stream.

Further, the information of two deleted packets has been arranged between two sets of transmission packets in the embodiment described above but it is apparent that it may be put, for instance, immediately before or immediately after each transmission packet.

As described above, the present invention has an effect that it is possible to prevent the buffer of the decoder from causing the overflow or the underflow and also, to stabilize the decoding process by controlling the output rate of reproduced data.

As described above, the present invention can provide an extremely preferable recording/reproducing apparatus for a data packet stream.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended claims.

The foregoing description and the drawings are regarded by the applicant as including a variety of individually inventive concepts, some of which may lie partially or wholly outside the scope of some or all of the following claims. The fact that the applicant has chosen at the time of filing of the present application to restrict the claimed scope of protection in accordance with the following claims is not to be taken as a disclaimer or alternative inventive concepts that are included in the contents of the application and could be defined by claims differing in scope from the following claims, which different claims may be adopted subsequently during prosecution, for example, for the purposes of a divisional application.

## Claims

1. A recording/reproducing apparatus for a data packet stream comprising:
extracting means for extracting prescribed one or more intended types of data packets from an input packet train in which different types of data packets have been time-division multiplexed with each other so as to output them as the extracted data packets;
recording means for recording the extracted data packets;
reproducing means for reproducing the extracted data packet recorded by the recording means;
dummy packet producing means for producing dummy packets which correspond to non-extracted data packet; and
output means for outputting an output data packet train which is produced by combining the extracted data packets and the dummy packets in accordance with the order of the packets in the input packet train.

2. A recording/reproducing apparatus for a data packet stream as claimed in claim 1, wherein the data packets include an identification data for identifying the type of data packets, and the dummy packets are produced in place of the data packets containing undesired identification data.

3. A recording/reproducing apparatus for a data packet stream as claimed in claim 1, wherein the dummy packet producing means produces the dummy packet based on null data.

4. A recording/reproducing apparatus for a data packet stream as claimed in claim 1, wherein the data packets include an identification data for identifying the type of data packets, and the dummy packets are produced in place of the data packets containing the identification data indicating null data.

5. A recording/reproducing apparatus for a data packet stream as claimed in claim 1, wherein the input packet train includes a transport data stream according to the MPEG2 standard; and
the dummy packet producing means produces the dummy packet by controlling PIDs contained in the transport data stream.

6. A recording/reproducing apparatus for a data packet stream as claimed in claim 1, wherein the input packet train includes a transport data stream according to the MPEG2 standard; and
the dummy packet producing means produces the dummy packet by constructing an the information signal of the transport data stream by null data.

7. A recording/reproducing apparatus for a data packet stream as claimed in claim 1, wherein the output means successively outputs the output packet train.

8. A recording/reproducing apparatus for a data packet stream comprising:
extracting means for extracting prescribed one or more intended types of data packets from an input packet train in which different types of data packets have been time-division multiplexed with each other so as to output them as the extracted data packets;
deleting packet detecting means for detecting the number of data packets of non-extracted data in contiguous sequence lying between the extracted data so as to output the non-extracted data as information of the deleted packets;
combining means for combining the extracted data with the information of the deleted packets;
recording means for recording the output from the combining means;
reproducing means for reproducing signals recorded by the recording means;
separation means for separating the extracted data and the information of the number of deleted packets in contiguous sequence from the reproduced signal;
dummy packet producing means for producing dummy packets which correspond to non-extracted data packet; and
output means for outputting an output data packet train which is produced by combining the extracted data packets and the dummy packets separately output from the separation means in accordance with the order of the packets in the input packet train.

9. A recording/reproducing apparatus for a data packet stream as claimed in any preceding claim, wherein the output means outputs the output packet train at the same rate as that of the input packet train.

10. A recording/reproducing apparatus for a data packet stream as claimed in claim 8, wherein the combining means assign a plurality of extracted data to a plurality of recorded data packets based on the recorded data packet of the recording means, as well as assign the information of the number of deleted packets in contiguous sequence to the recorded data packets to which more than two extracted data or part of them are assigned.

11. A recording/reproducing apparatus for a data packet stream as claimed in claim 10, wherein the input data trains include a transport data stream according to the MPEG2 standard, the recording means comply with the consumer-use high-definition (HD) digital VTR standard, and the combining means assign two packets of the transport data stream to five sync-blocks, each being the recorded data packet of the recording means, and also assign the information of two deleted packets to a sync-block to which two packets of the transport data streams are partially assigned.
